# FASCICULE DE BREVET EUROPEEN

(11) **EP 3 882 142 B1**
(45) Date de publication et mention de la délivrance du brevet: **01.06.2022**
(21) Numéro de dépôt: 21153647.9
(22) Date de dépôt: 27.01.2021
(51) Int. Cl.: B64C 29/00, B64C 13/50, G05D 1/08, B64C 27/22

(54) **PROCEDE DE PROTECTION D'UNE MARGE DE CONTROLE DE L'ATTITUDE EN LACET D'UN HELICOPTERE HYBRIDE ET UN HELICOPTERE HYBRIDE**
VERFAHREN ZUM SCHUTZ EINES KONTROLLSPIELRAUMS DER GIERLAGE EINES HYBRIDHUBSCHRAUBERS UND HYBRIDHUBSCHRAUBER
METHOD FOR PROTECTING A MARGIN FOR CONTROLLING THE THRUST ATTITUDE OF A HYBRID HELICOPTER AND A HYBRID HELICOPTER

(30) Priorité: 17.03.2020 FR 2002606
(43) Date de publication de la demande: 22.09.2021
(73) Titulaire: Airbus Helicopters, 13725 Marignane Cedex (FR)
(72) Inventeur: HUOT, Rémy, 13008 MARSEILLE (FR); EGLIN, Paul, 13830 ROQUEFORT LA BEDOULE (FR)
(74) Mandataire: GPI Brevets

(56) Documents cités:
- CN-A- 108 045 572
- CN-A- 109 665 096
- FR-A1- 2 943 620
- FR-A1- 2 946 316
- RU-C1- 2 579 235

## Description

La présente invention concerne un procédé de protection d'une marge de contrôle de l'attitude en lacet d'un hélicoptère hybride et aussi un hélicoptère hybride appliquant ce procédé. L'invention se situe dans le domaine technique des systèmes de commande notamment en lacet d'un hélicoptère hybride.

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E ».

Un type de giravion est dénommé « hélicoptère hybride » par commodité en raison de sa spécificité. Un hélicoptère hybride comporte une cellule portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un hélicoptère hybride comprend de plus au moins une hélice, possiblement de type hélice tractive ou propulsive. Par exemple, le giravion hybride peut être pourvu d'au moins deux hélices agencées transversalement de part et d'autre du fuselage.

Par ailleurs, un hélicoptère hybride comporte une installation motrice pour mettre en mouvement chaque hélice et le rotor de sustentation, éventuellement en permanence hors cas de panne ou d'essais.

Pour piloter un hélicoptère hybride, un pilote de l'hélicoptère hybride peut manœuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

Notamment sur un hélicoptère hybride à au moins deux hélices situées de part et d'autre du fuselage, le pas des pales de chaque hélice est fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, l'hélicoptère hybride inclut au moins une commande de la poussée apte à modifier la valeur de la composante de pas moyen, via une architecture mécanique et/ou électrique par exemple.

Par exemple, la commande de poussée peut prendre la forme d'un levier ou d'un bouton transmettant un signal analogique ou numérique voire optique à un ou plusieurs actionneurs. Selon un exemple, un tel bouton peut présenter au moins trois états discrets à savoir un premier état dit « beep+ » requérant une augmentation de la valeur de la composante de pas moyen, un deuxième état dit « beep- » requérant une baisse de la valeur de la composante de pas moyen et un troisième état requérant de ne pas modifier la valeur de la composante de pas moyen. Le pas des pales des hélices est alors augmenté tant qu'un pilote positionne le bouton dans son premier état. Selon un autre exemple, le bouton peut prendre la forme d'une molette transmettant un signal analogique à au moins un actionneur pour régler finement la composante de pas moyen du pas des premières et deuxièmes pales.

Par ailleurs, des fonctions de contrôle de direction notamment en lacet peuvent être réalisées par l'utilisation d'une commande de lacet apte à modifier la valeur de la composante de pas différentiel. Par exemple, une telle commande de lacet peut comprendre un palonnier relié par une architecture mécanique et/ou électrique aux hélices. Le palonnier permet de régler la valeur de la composante de pas différentiel.

Des exemples d'hélicoptères hybrides sont décrits dans les documents US 8181901, US 8170728, US 8052094 et US 8113460 par exemple.

Le pas total des hélices peut être borné pour garantir que l'hélicoptère hybride puisse atteindre des objectifs de performances, et/ou de manœuvrabilité et/ou de résistances à des charges aérodynamiques.

A cet effet, l'hélicoptère hybride peut comporter des organes pour diminuer l'autorité de la commande de lacet à mesure que la composante de pas moyen augmente, et inversement. Ainsi, un même déplacement de la commande de lacet induit des variations différentes de la composante de pas différentiel en fonction de la valeur de la composante de pas moyen.

En outre, des butées peuvent limiter le déplacement de la commande de lacet.

Dans un diagramme de commande de vol présentant en abscisse le pas d'une première hélice située d'un premier côté de l'aéronef aux yeux d'un pilote de l'hélicoptère hybride et en ordonnée le pas d'une deuxième hélice située d'un deuxième côté de l'hélicoptère hybride aux yeux du pilote, ces pas peuvent être dès lors maintenus dans un domaine délimité par une unique enveloppe. Cette unique enveloppe peut avoir une forme d'entonnoir qui est effilée à mesure que les pas totaux augmentent, et par exemple une forme de trapèze ou une forme plus complexe.

En raison de cette forme de l'enveloppe bornant le pas total de chaque hélice, la marge de manœuvre en lacet peut être restreinte lors d'une accélération rapide, par exemple pour passer d'une phase de vol stationnaire à une phase de vol d'avancement à haute vitesse. Durant un vol stationnaire le pilote sollicite la commande de lacet pour maintenir l'hélicoptère hybride dans une position stationnaire. La commande de lacet n'est pas en butée. Pour atteindre la phase de vol d'avancement à haute vitesse, le pilote sollicite la commande de poussée. Durant une phase transitoire, la composante de pas moyen du pas des hélices est fortement augmentée ce qui induit de fait une augmentation des pas totaux des premières et deuxièmes pales des hélices. En parallèle, le pilote sollicite la commande de lacet pour maintenir l'attitude en lacet de l'hélicoptère hybride puisque l'autorité de la commande de lacet diminue à mesure que la composante de pas moyen du pas des hélices augmente. Les pas totaux des premières et deuxièmes pales des hélices se rapprochent des bords de l'enveloppe, la commande de lacet se rapprochant d'une de ses butées. La marge de modification de la composante de pas différentiel peut en conséquence être réduite et peut transitoirement conférer une marge de contrôle de l'attitude en lacet restreinte.

Afin d'augmenter cette liberté de manœuvre en lacet pendant la période transitoire, le pilote peut soit réduire collectivement le pas des pales du rotor de sustentation de manière temporaire pour diminuer le couple exercé par le rotor de sustentation sur la cellule de l'hélicoptère hybride soit réduire la composante de pas moyen du pas des premières et deuxièmes pales des hélices.

Le document FR 2946315 décrit un procédé de commande et de régulation pour un giravion comportant un rotor principal de sustentation, au moins une hélice à pas variable et au moins une source motrice pour entraîner le rotor principal et chaque hélice. Ce procédé consiste à élaborer au moins une consigne de pas moyen pour la composante de pas moyen de chaque hélice en fonction d'un ordre de commande. Selon ce procédé, différents modes de fonctionnement sont applicables. Selon un mode direct, la valeur de la composante de pas moyen résulte directement de l'ordre de commande. Selon un mode forcé, en cas d'autorotation du rotor principal la composante de pas moyen est forcée automatiquement sur commande du pilote à une valeur de pas calculée. Selon un mode régulé, la puissance consommée par l'hélice ou les hélices est régulée en fonction d'une consigne de puissance issue d'une commande de variation de poussée. Selon un mode protégé pouvant être activé dans le cadre des différents autres modes de fonctionnement hormis le mode forcé, lorsque l'un au moins de différents paramètres physiques limitants a atteint ou dépassé sa limite correspondante, la consigne de la composante de pas moyen est diminuée automatiquement.

Le document FR 2946316 décrit un hélicoptère hybride muni d'un moyen de commande de lacet apte à générer un ordre originel pour modifier l'attitude en lacet de l'hélicoptère hybride en augmentant le pas des pales d'une hélice et en baissant le pas des pales d'une autre hélice. De plus, selon le procédé décrit, l'ordre originel est optimisé en fonction de la position d'une commande de poussée pour obtenir un ordre optimisé de commande de lacet transmis aux hélices.

Les documents FR 2943620 A1, CN 108 045 572 A, CN 109 665 096 A et RU 2 579 235 C1 sont aussi connus.

La présente invention a alors pour objet de proposer un procédé innovant visant à optimiser la marge de contrôle de l'attitude en lacet notamment lors d'une phase d'accélération entre une phase de vol stationnaire et une phase de vol de croisière.

Ainsi, l'invention vise un procédé de protection d'une marge de contrôle de l'attitude en lacet d'un hélicoptère hybride, cet hélicoptère hybride comportant un rotor de sustentation agencé au dessus d'un fuselage ainsi qu'au moins une première hélice et au moins une deuxième hélice disposées de part et d'autre du fuselage. Ledit hélicoptère hybride a une commande de poussée configurée pour générer au moins un premier ordre ou un deuxième ordre pour modifier un premier pas de premières pales de la première hélice et un deuxième pas de deuxièmes pales de la deuxième hélice par exemple de la même quantité, ledit hélicoptère hybride ayant une commande de lacet configurée pour modifier l'attitude en lacet dudit hélicoptère hybride en augmentant le premier pas desdites premières pales et en baissant le deuxième pas desdites deuxièmes pales.

Par ailleurs, le procédé comporte une phase de protection comprenant l'étape suivante : suite à l'émission d'un dit premier ordre émis pour augmenter, par exemple de la même quantité, le premier pas et le deuxième pas, inhibition par un calculateur de pilotage de ce premier ordre lorsque ledit hélicoptère hybride atteint un point de fonctionnement pour lequel une marge de contrôle de l'attitude en lacet est inférieure ou égale à un seuil et/ou pour lequel une prédiction de ladite marge de contrôle de l'attitude en lacet qui sera atteinte dans un intervalle de temps prédéterminé est inférieure ou égale au seuil.

L'expression « point de fonctionnement pour lequel une marge de contrôle de l'attitude en lacet est inférieure ou égale à un seuil et/ou pour lequel une prédiction de ladite marge de contrôle de l'attitude en lacet qui sera atteinte dans un intervalle de temps prédéterminé est inférieure ou égale au seuil » fait référence à :
- un point de fonctionnement pour lequel une marge de contrôle de l'attitude en lacet est inférieure ou égale à un seuil,
- ou un point de fonctionnement pour lequel une prédiction de ladite marge de contrôle de l'attitude en lacet qui sera atteinte dans un intervalle de temps prédéterminé est inférieure ou égale au seuil,
- ou un point de fonctionnement pour lequel une marge de contrôle de l'attitude en lacet est inférieure ou égale à un seuil et pour lequel une prédiction de ladite marge de contrôle de l'attitude en lacet qui sera atteinte dans un intervalle de temps prédéterminé est inférieure ou égale au seuil.

Par suite, selon ce procédé, si le pilote manœuvre la commande de poussée pour accélérer l'hélicoptère hybride selon une direction d'avancement, le calculateur de pilotage vérifie que la commande de lacet présente à chaque itération du procédé une marge de contrôle de l'attitude en lacet minimale et donc suffisante pour que le pilote puisse piloter l'aéronef. Dans l'affirmative, le calculateur de pilotage traite le premier ordre selon des instructions mémorisées et transmet un signal à au moins un actionneur pour augmenter le premier pas et le deuxième pas. Dans la négative, le calculateur de pilotage inhibe la commande de poussée temporairement afin d'éviter que la commande de lacet soit en butée. Le terme « inhibe » signifie que le calculateur de pilotage ne tient pas compte du premier ordre.

De manière alternative ou complémentaire, le calculateur de pilotage peut vérifier à chaque itération du procédé que la commande de lacet va présenter une marge de contrôle de l'attitude en lacet minimale dans un intervalle de temps prédéterminé, par exemple dans une ou deux secondes. Si le calculateur de pilotage détermine que le premier ordre va en engendrer dans cet intervalle de temps une marge de contrôle de l'attitude en lacet trop faible, le calculateur de pilotage inhibe la commande de poussée temporairement.

A titre illustratif, le pilote peut manœuvrer la commande de poussée pour passer d'une phase de vol stationnaire à une phase de vol à haute vitesse. La composante de pas moyen augmente ce qui induit une augmentation de la première valeur du premier pas des premières pales et de la deuxième valeur du deuxième pas des deuxièmes pales. La vitesse d'avancement de l'hélicoptère hybride augmente à son tour mais avec de fait un léger décalage dans le temps. Dès que le calculateur de pilotage détecte que l'hélicoptère hybride atteint un point de fonctionnement pour lequel la marge de contrôle de l'attitude en lacet est trop faible ou sera trop faible à court terme, en fonction d'une logique mémorisée, le calculateur de pilotage inhibe le premier ordre. Le premier pas des premières pales et le deuxième pas des deuxièmes pales n'augmentent plus, à une variation de la composante de pas différentiel près. En parallèle, le pilote peut baisser le pas collectif des pales du rotor de sustentation ce qui induit une diminution du couple exercé par le rotor de sustentation sur le fuselage. Par conséquent, le pilote peut manœuvrer la commande de lacet afin d'abaisser la composante de pas différentiel pour compenser. Il en résulte de fait que la marge de contrôle de l'attitude en lacet augmente. Dès que la marge de contrôle de l'attitude en lacet n'est plus ou ne risque plus d'être inférieure ou égale au seuil requis, un éventuel premier ordre ultérieur n'est plus inhibé.

Ce procédé permet ainsi de conserver une marge minimale de manœuvrabilité de la commande de lacet en empêchant le pilote d'accélérer l'hélicoptère hybride lorsque les conditions mémorisées sont remplies. Ce procédé permet d'éviter d'avoir une faible marge de manœuvrabilité lorsque les hélices doivent encore fortement assurer une fonction anticouple.

Ce procédé peut de plus comporter une ou plusieurs des caractéristiques qui suivent

Ainsi, selon une option, le procédé peut comporter une étape de détermination d'une vitesse d'augmentation d'une composante de pas moyen du premier pas et du deuxième pas, ladite phase de protection étant initiée uniquement si ladite vitesse d'augmentation est supérieure à une valeur prédéterminée.

L'expression « vitesse d'augmentation » désigne la vitesse selon laquelle la composante de pas moyen est augmentée le cas échéant. La valeur prédéterminée peut être déterminée par essais et/ou simulations par exemple. La vitesse d'augmentation peut être estimée en degré de pas par minute par exemple. Selon cette option, la phase de protection peut être inhibée en présence d'une augmentation lente de la composante de pas moyen du premier pas et du deuxième pas. A titre illustratif uniquement, si la composante de pas moyen augmente par exemple à raison d'un degré par minute, la phase de protection peut être inhibée. En effet, le décalage temporel entre l'augmentation de la composante de pas moyen et l'augmentation de la vitesse air vraie peut alors avoir un impact faible sur la marge de contrôle de l'attitude en lacet.

Alternativement, la phase de protection peut être toujours active.

Selon une possibilité, la marge de contrôle de l'attitude en lacet peut être exprimée en degrés de pas, ledit seuil étant égal à un pourcentage prédéterminé d'une plage de commande de pas à un point de fonctionnement courant, ledit point de fonctionnement courant étant défini par une première valeur courante du premier pas et une deuxième valeur courante du deuxième pas atteintes durant une itération courante.

La prédiction de la marge de contrôle de l'attitude en lacet représente une valeur prédite de la marge de contrôle de l'attitude en lacet que la marge de contrôle de l'attitude en lacet va potentiellement atteindre dans l'intervalle de temps prédéterminé si les conditions sont inchangées. A chaque itération, la prédiction de la marge de contrôle de l'attitude en lacet peut être évaluée par le calculateur de pilotage en déterminant un point de fonctionnement prédictif défini par une première valeur prédite du premier pas et une deuxième valeur prédite du deuxième pas atteintes. Par exemple, la première valeur prédite P1 peut être égale à la première valeur courante PAS1CUR plus le produit de l'intervalle de temps DT multiplié par une vitesse V1 à laquelle est modifié le premier pas soit: P1=PAS1CUR+DT*V1. De même, la deuxième valeur prédite P2 peut être égale à la deuxième valeur courante PAS2CUR plus le produit de l'intervalle de temps DT multiplié par une vitesse V2 à laquelle est modifié le deuxième pas soit : P2=PAS2CUR+DT*V2.

La marge de contrôle de l'attitude en lacet est exprimée au regard du pas réel des hélices. Lorsque l'hélicoptère hybride comporte des vérins séries pour le pilotage automatique du lacet, quand les vérins séries sont centrés alors la marge de contrôle de l'attitude en lacet est l'image directe de la marge de la commande de lacet au regard de ses butées.

Par exemple, le pourcentage est compris entre 10 pourcents et 20 pourcents.

Ce pourcentage peut être établi par essais. Eventuellement, le pourcentage peut être compris entre 10 et 15 pourcents, ou entre 15 et 20 pourcents, ou entre 12.5 et 17.5 pourcents, voire peut être de l'ordre de 15 pourcents.

Un tel pourcentage tend à garantir que la marge de manœuvre de la commande de lacet est suffisante quelle que soit la situation.

Selon un exemple si la plage de commande est égale à 10 degrés de pas et que le pourcentage vaut 15, le seuil vaut 1.5 degrés de pas. Lorsque l'hélicoptère hybride atteint un point de fonctionnement où la marge de contrôle de l'attitude en lacet est inférieure ou égale ou sera inférieure à 1.5 degrés de pas, le premier ordre est inhibé.

Selon un autre aspect, l'étape d'évaluation que la marge de contrôle de l'attitude en lacet au regard d'une enveloppe bornant un domaine de commande de vol autorisé est inférieure à un seuil peut être réalisée de diverses manières. En particulier, cette marge de contrôle de l'attitude en lacet n'est pas nécessairement calculée.

Selon une possibilité, le procédé peut comporter une phase d'évaluation pour déterminer si ledit hélicoptère hybride atteint ledit point de fonctionnement pour lequel la marge de contrôle de l'attitude en lacet est inférieure ou égale au seuil, ladite phase d'évaluation comportant les étapes suivantes à chaque itération :
- détermination d'un point de fonctionnement courant défini par une première valeur courante du premier pas et une deuxième valeur courante du deuxième pas à une itération courante,
- détermination que le point de fonctionnement courant est inclus dans un ensemble mémorisé,
- détermination que ladite marge de contrôle de l'attitude en lacet est inférieure ou égale audit seuil lorsque ledit point de fonctionnement courant est inclus dans ledit ensemble mémorisé.

A chaque itération, un ensemble mémorisé de points de fonctionnement devant générer une inhibition d'un premier ordre est associé à une enveloppe délimitant un domaine de vol courant. Si le point de fonctionnement courant est présent dans cet ensemble alors le premier ordre est inhibé.

Cette méthode est aussi applicable à la prédiction de la marge de contrôle de l'attitude en lacet en prenant non pas en considération le point de fonctionnement courant mais un point de fonctionnement prédit, par exemple selon la méthode décrite précédemment.

Selon une possibilité, le procédé peut comporter une phase d'évaluation pour déterminer si ledit hélicoptère hybride atteint ledit point de fonctionnement pour lequel la marge de contrôle de l'attitude en lacet est inférieure ou égale au seuil, ladite phase d'évaluation comportant les étapes suivantes à un instant de calcul :
- détermination d'un point de fonctionnement courant défini par une première valeur courante du premier pas et une deuxième valeur courante du deuxième pas à une itération courante,
- affectation à ce point de fonctionnement courant d'une « information de marge », ledit hélicoptère hybride comprenant une mémoire associant à chaque point de fonctionnement possible au moins une dite information de marge,
- détermination que ladite marge de contrôle de l'attitude en lacet au regard de ladite enveloppe est inférieure ou égale audit seuil en fonction de ladite information de marge.

Pour chaque point de fonctionnement, une donnée dite « information de marge » est mémorisée dans l'aéronef. A chaque instant de calcul, le calculateur de pilotage sollicite une mémoire pour déterminer l'information de marge mémorisée correspondant au point de fonctionnement courant dans les conditions courantes.

Par exemple, l'information de marge peut être une marge mémorisée qui est ensuite comparée au seuil. Selon un exemple, le seuil prend la forme d'une valeur de pas égale à 15 degrés. Si au point de fonctionnement courant, la marge mémorisée vaut aussi 15 degrés le premier ordre est inhibé.

Selon un autre exemple, l'information de marge peut comprendre deux chaînes de caractères différentes correspondant respectivement à une situation ou ladite marge de contrôle de l'attitude en lacet au regard de ladite enveloppe est inférieure ou égale audit seuil et à une situation ou ladite marge de contrôle de l'attitude en lacet au regard de ladite enveloppe est supérieure audit seuil. En fonction de la chaîne de caractères affectée au point de fonctionnement courant, le calculateur de pilotage détermine la situation courante et si le premier ordre doit être appliqué ou inhibé/annulé.

Cette méthode est aussi applicable à la prédiction de la marge de contrôle de l'attitude en lacet en prenant non pas en considération le point de fonctionnement courant mais un point de fonctionnement prédit, par exemple selon la méthode décrite précédemment.

Selon un autre aspect, suite à ladite inhibition par le calculateur de pilotage du premier ordre, ledit procédé peut comporter l'étape suivante: baisse du premier pas et du deuxième pas sur commande dudit calculateur de pilotage.

Cette variante ne se contente pas d'inhiber le premier ordre mais va plus loin en proposant à l'inverse de baisser la composante de pas moyen des pas des premières pales et des deuxièmes pales tant que la marge de contrôle de l'attitude n'est pas restaurée.

Selon un autre aspect, ledit calculateur de pilotage n'inhibe éventuellement jamais un ordre de type deuxième ordre émis pour baisser de la même quantité le premier pas et le deuxième pas.

Par ailleurs, l'invention vise un hélicoptère hybride, ledit hélicoptère hybride comportant un rotor de sustentation agencé au dessus d'un fuselage, au moins une première hélice et au moins une deuxième hélice disposées de part et d'autre du fuselage, ledit hélicoptère hybride ayant une commande de poussée configurée pour générer au moins un premier ordre ou un deuxième ordre afin de modifier à l'aide d'au moins un actionneur de la même quantité un premier pas de premières pales de la première hélice et un deuxième pas des deuxièmes pales de la deuxième hélice, ledit hélicoptère hybride ayant une commande de lacet configurée pour modifier l'attitude en lacet dudit hélicoptère hybride en augmentant le pas desdites premières pales et en baissant le pas desdites deuxièmes pales,

Cet hélicoptère hybride comporte un calculateur de pilotage en communication avec la commande de poussée, voire avec ledit au moins un actionneur, et configuré pour appliquer le procédé selon de l'invention décrit précédemment.

La commande de poussée et la commande de lacet peuvent comprendre des organes commandables par un pilote de manière usuelle, et éventuellement un capteur détectant une commande reliée au calculateur de pilotage. Par exemple, la commande de poussée peut comprendre un bouton manœuvrable par un pilote qui génère un signal analogique ou numérique qui varie en fonction de la position de ce bouton. Selon un autre exemple, la commande de poussée peut comprendre un levier et un capteur de position, le capteur de position générant un signal analogique ou numérique qui varie en fonction de la position angulaire ou linéaire du levier.

Par ailleurs, l'hélicoptère hybride peut comprendre au moins un voire au moins deux actionneurs en communication avec le calculateur de pilotage et agencés respectivement sur au moins une chaîne de commande commandant la composante de pas moyen et la composante de pas différentiel du premier pas des premières pales et du deuxième pas des deuxièmes pales.

Ainsi, la commande de poussée transmet un signal analogique ou numérique au calculateur de pilotage, le calculateur de pilotage traitant ce signal pour commander au moins un actionneur en conséquence.

Selon un aspect, l'hélicoptère hybride peut comporter un premier senseur de mesure du premier pas et un deuxième senseur de mesure du deuxième pas.

Selon un aspect, l'hélicoptère hybride peut comporter une commande de pas cyclique pour modifier cycliquement le pas de pales du rotor de sustentation, ladite commande de pas cyclique étant munie d'un organe déplaçable par un pilote et d'un senseur de position émettant un signal de position, ledit signal de position variant en fonction d'une manœuvre de l'organe déplaçable. L'invention et ses avantages apparaîtront avec plus de détails dans le cadre de la description qui suit avec des exemples donnés à titre illustratif en référence aux figures annexées qui représentent :
la figure 1, une vue schématique d'un hélicoptère hybride selon l'invention,
la figure 2, une vue schématique d'une première architecture de commande des hélices d'un hélicoptère hybride selon l'invention,
la figure 3, une vue schématique d'une deuxième architecture de commande des hélices d'un hélicoptère hybride selon l'invention,
la figure 4, un logigramme illustrant le procédé selon l'invention, et
la figure 5, un diagramme illustrant le procédé selon l'invention.

Les éléments présents dans plusieurs figures distinctes sont affectés d'une seule et même référence.

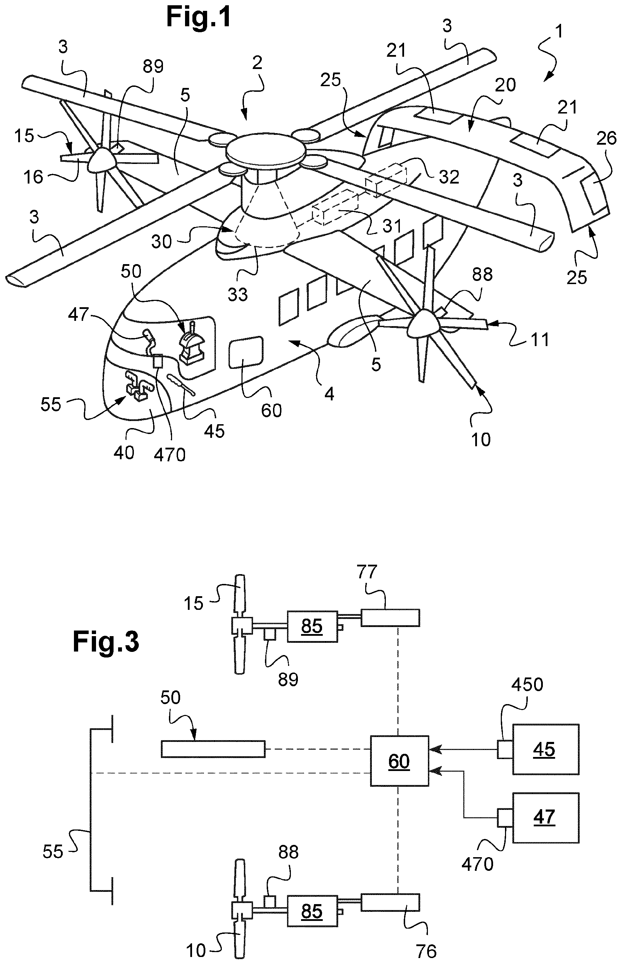

La figure 1 présente un hélicoptère hybride 1 selon l'invention Cet hélicoptère hybride 1 comporte un fuselage 4 au dessus duquel est agencé au moins un rotor de sustentation 2. Ce rotor de sustentation 2 est muni de plusieurs pales dénommées « pales principales 3 » par commodité.

De plus, l'hélicoptère hybride 1 est pourvu d'au moins une première hélice 10 et d'au moins une deuxième hélice 15, de type tractive ou propulsive. Les première et deuxième hélices 10, 15 comportent respectivement plusieurs premières pales 11 et plusieurs deuxièmes pales 16. La première hélice 10 et la deuxième hélice 15 peuvent être disposées latéralement par rapport au fuselage 4, notamment de part et d'autre d'un plan antéropostérieur de l'hélicoptère hybride 1. Sur la figure 1 les première et deuxième hélices 10, 15 peuvent être inversées. Les première et deuxième hélices 10, 15 sont éventuellement portées par un support 5. Un tel support 5 peut être éventuellement aérodynamique. Par exemple le support 5 comporte une aile selon l'illustration de la figure 1. Selon la figure 1, les hélices sont disposées au niveau du bord d'attaque d'une aile. Selon un autre exemple, les hélices sont disposées au niveau du bord de fuite de l'aile.

Par ailleurs, l'hélicoptère hybride 1 peut comprendre des surfaces de stabilisation voire de manœuvre. Par exemple, l'hélicoptère hybride 1 peut comprendre pour la profondeur au moins un empennage sensiblement horizontal 20 éventuellement avec des gouvernes de profondeur mobiles 21. Par exemple, l'hélicoptère hybride 1 peut comprendre pour la direction au moins un empennage sensiblement vertical 25 éventuellement avec des gouvernes mobiles 26. La figure 1 illustre ainsi une dérive en forme de U inversé mais la dérive peut avoir diverses formes sans sortir du cadre de l'invention. Selon un autre exemple, la dérive peut avoir une forme de H.

Par ailleurs, l'hélicoptère hybride 1 comporte une installation motrice 30 pour fournir une puissance au rotor de sustentation 2 et à chaque hélice 10, 15. Cette installation motrice 30 comporte à cet effet au moins un moteur 31 contrôlé par un calculateur moteur 32 usuel.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaines de liaison mécaniques à une boîte de transmission de puissance principale 33 qui entraîne en rotation le rotor de sustentation 2. De plus, la boîte de transmission de puissance principale 33 peut être reliée mécaniquement par au moins un arbre à une boîte de transmission de puissance latérale par hélice qui est donc à son tour reliée à une hélice 10, 15.

Les vitesses de rotation des sorties du ou des moteurs, des hélices, du rotor de sustentation et du système mécanique d'interconnexion sont éventuellement proportionnelles entre elles, le rapport de proportionnalité étant éventuellement constant quelle que soit la configuration de vol de l'hélicoptère hybride en conditions normales de fonctionnement, à savoir hors cas de panne ou d'essais ou de formation.

Par ailleurs, l'hélicoptère hybride 1 peut comprendre diverses commandes pour être piloté par un pilote humain.

En particulier, l'hélicoptère hybride 1 peut comprendre un système de commande pour piloter collectivement et cycliquement le pas des pales principales 3. Un tel système de commande peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3. Le pas des pales principales 3 est dénommé « pas principal » pour être clairement distingué du pas d'autres pales.

Dès lors, l'hélicoptère hybride 1 peut comprendre une commande de pas collectif 45 qui agit sur au moins une chaine de commande mécanique et/ou électrique du système de commande pour faire varier collectivement le pas principal des pales principales 3, via le cas échéant l'ensemble de plateaux cycliques. Par exemple, la commande de pas collectif 45 comporte un levier.

De même, l'hélicoptère hybride 1 peut comprendre une commande de pas cyclique 47 qui agit sur une ou plusieurs chaines de commande mécaniques et/ou électriques du système de commande pour faire varier cycliquement le pas principal des pales principales 3, via le cas échéant l'ensemble de plateaux cycliques. En outre, la commande de pas cyclique 47 peut comprendre un senseur de position 470 qui émet un signal analogique, numérique ou optique qui varie en fonction de la position d'un organe mobile du senseur de position. Par exemple, la commande de pas cyclique 47 comporte un manche et un senseur de position incluant au moins deux capteurs de position angulaire pour évaluer une position du manche, tels que par exemple des potentiomètres.

De manière usuelle, l'hélicoptère hybride 1 peut comprendre des commandes reliées au système de commande pour piloter le pas des premières pales 11 et des deuxièmes pales 16. A chaque instant le premier pas des premières pales 11 de la première hélice 10 peut être égal à la somme d'une composante de pas moyen et d'une composante de pas différentiel alors que le deuxième pas des deuxièmes pales 16 de la deuxième hélice 15 est égal à la différence de cette composante de pas moyen et de la composante de pas différentiel.

Eventuellement, l'hélicoptère hybride 1 comporte un premier senseur 88 de mesure pour mesurer la première valeur du premier pas et un deuxième senseur 89 de mesure pour mesurer la deuxième valeur du deuxième pas. Par exemple, le premier senseur 88 de mesure comporte un capteur de position émettant un signal analogique, numérique ou optique qui varie en fonction de la position d'un arbre de commande du pas des premières pales 11. De même, le deuxième senseur 89 peut comporter un capteur de position émettant un signal analogique, numérique ou optique qui varie en fonction de la position d'un arbre de commande du pas des deuxièmes pales 16.

De manière usuelle, l'hélicoptère hybride 1 peut comprendre une commande de poussée 50 qui agit sur une ou plusieurs chaines de commande mécaniques et/ou électriques du système de commande pour faire varier la composante de pas moyen afin par exemple de piloter une vitesse d'avancement de l'hélicoptère hybride 1. La figure 1 illustre une commande de poussée 50 de type levier mais peut aussi prendre la forme d'un bouton générant un signal numérique ou analogique par exemple.

De même, l'hélicoptère hybride 1 peut comprendre une commande de lacet 55 qui agit sur une ou plusieurs chaines de commande mécaniques et/ou électriques du système de commande pour faire varier la composante de pas différentiel du pas des premières pales 11 et du pas des deuxièmes pales 16.

En outre, le système de commande peut comporter un calculateur de pilotage 60 en communication au moins avec la commande de poussée 50 et au moins un actionneur pour appliquer le procédé de l'invention.

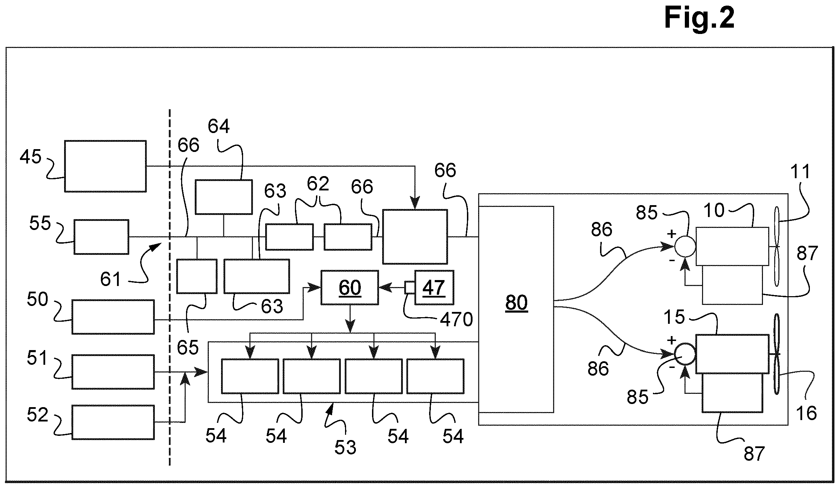

La figure 2 présente un exemple de système de commande des hélices 10, 15.

Selon ce système de commande, la commande de lacet 55 est reliée par une première chaîne mécanique principale 61 à un combinateur mécanique 80. Cette première chaîne mécanique principale 61 peut comporter au moins un lien rigide 66, au moins un vérin série de lacet 62, des organes 63 générant des efforts de friction. Par exemple, un lien rigide peut prendre la forme d'une bielle ou équivalant. Un dispositif usuel 64 peut aussi amortir les déplacements de la commande de lacet 55. Au moins un vérin de trim de lacet 65 peut être agencé en parallèle de la première chaîne mécanique principale 61. Chaque vérin de trim en lacet 65 et chaque vérin série de lacet 62 est commandé par le calculateur de pilotage 60.

En outre, la première chaîne mécanique principale 61 peut comporter une unité de réglage 67 permettant par exemple de modifier l'autorité de la commande de lacet 55 en fonction d'une manœuvre de la commande de pas collectif 45 et/ou d'une manœuvre de la commande de poussée 50 directement ou via le calculateur de pilotage 60. Le calculateur de pilotage 60 peut aussi agir sur l'autorité de la commande de lacet 55 en pilotant les vérins séries de lacet 62 par exemple.

Le combinateur 80 est en outre lié, pour chaque hélice 10, 15, à une tige de commande d'un distributeur hydraulique 85 par une chaîne cinématique secondaire 86, et par exemple par une commande à billes. En fonction des ordres donnés par le pilote, les tiges de commande sont déplacées afin que les distributeurs hydrauliques 85 relient des servocommandes au circuit hydraulique de l'hélicoptère hybride 1 pour modifier le premier pas des premières pales 11 et le deuxième pas des deuxièmes pales 16. Un système 87 peut moduler les ordres transmis par le combinateur 80. Par exemple un tel système 87 comporte une tige de recopie du distributeur hydraulique 85 pouvant être déplacée sur ordre du calculateur de pilotage 60.

Par ailleurs, la commande de poussée 50 est lié au combinateur 80 par une deuxième chaîne cinématique principale 53 par exemple, la deuxième chaîne cinématique principale 53 comporte au moins actionneur 54, par exemple de type vérin série de poussée, relié mécaniquement au combinateur 80. Chaque actionneur série de poussée 54 peut recevoir un signal de commande analogique, numérique ou optique émis par le calculateur de pilotage 60 sur ordre de la commande de poussée 50. Par suite, la commande de poussée 50 émet un signal analogique, numérique ou optique qui est transmis au calculateur de pilotage 60, ce calculateur de pilotage 60 pilotant un ou plusieurs actionneurs série de poussée 54 en conséquence

Eventuellement, une commande de secours 51 peut aussi être mise place, et par exemple une commande de secours reliée mécaniquement à la deuxième chaîne cinématique principale 53. Selon un exemple, un levier peut déplacer la deuxième chaîne cinématique principale 53.

Eventuellement, une commande d'immobilisation 52 peut aussi être envisagée pour immobiliser la commande de secours 51.

Dans ces conditions, le combinateur 80 additionne l'ordre de variation de la composante de pas moyen, donné via la commande de poussée 50 par les actionneurs série de poussée 54, et l'ordre de variation de la composante de pas différentiel donné par la commande de lacet 55 voire par les vérins série de lacet. Plus précisément, lorsque la commande de poussée 50 est manœuvrée, un signal de commande est transmis au calculateur de pilotage 60. Le calculateur de pilotage 60 commande alors éventuellement un ou plusieurs actionneurs série de poussée 54 pour mettre en mouvement le combinateur 80 afin de modifier la composante de pas moyen des premières pales 11 et des deuxièmes pales 16.

La figure 3 présente un autre exemple de système de commande pour piloter les hélices 10, 15.

Selon cet exemple, la commande de lacet 55, la commande de poussée 50, la commande de pas collectif 45 et la commande de pas cyclique 47 communiquent avec le calculateur de pilotage 60. Ce calculateur de pilotage 60 est en communication avec des actionneurs 76, 77 reliés respectivement aux distributeurs hydrauliques 85.

Le calculateur de pilotage 60 applique alors des lois mémorisées pour commander les actionneurs 76, 77 en fonction des signaux émis par la commande de lacet 55 et la commande de poussée 50 voire la commande de pas collectif 45 et/ou la commande de pas cyclique 47.

Plus précisément, lorsque la commande de poussée 50 est manœuvrée, un signal de commande est transmis au calculateur de pilotage 60. Le calculateur de pilotage 60 commande alors éventuellement les actionneurs 76, 77 afin de modifier la composante de pas moyen des premières pales 11 et des deuxièmes pales 16.

Les systèmes de commande des figures 2 et 3 sont donnés à titre d'illustration. On se référera à la littérature pour obtenir des informations sur des architectures envisageables, et par exemple au document FR 2946315.

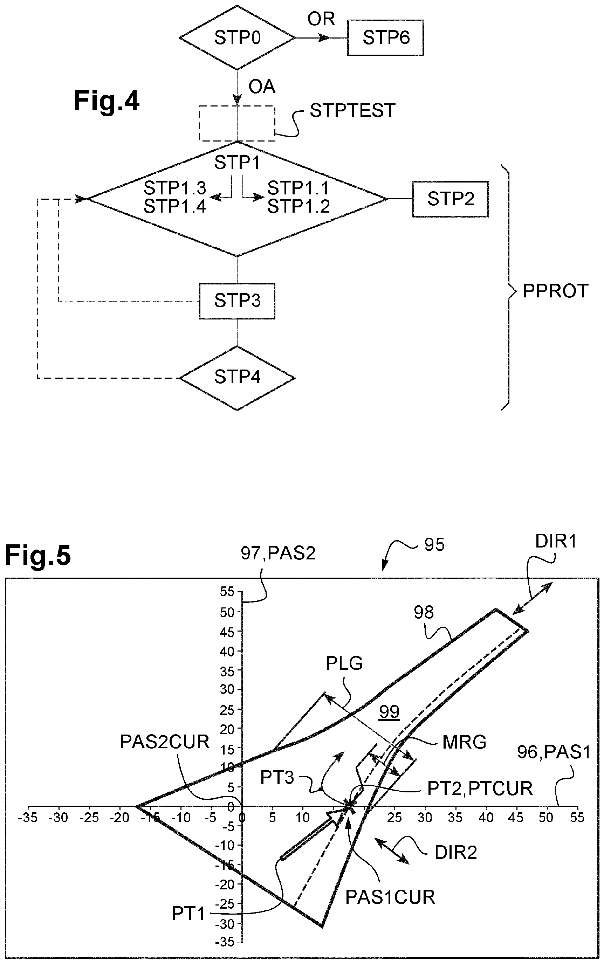

Selon un autre aspect, la figure 5 illustre un diagramme présentant le premier pas PAS1 des premières pales 11 en abscisse et le deuxième pas PAS2 des deuxièmes pales en ordonnée. Le premier pas PAS1 et le deuxième pas PAS2 sont maintenus dans une enveloppe 98 délimitant un domaine de commande de vol 99. A chaque itération de calcul, la première valeur courante PAS1cur du premier pas PAS1 et la deuxième valeur courante PAS2cur du deuxième pas PAS2 courant définissent un point de fonctionnement courant présent dans le domaine de commande de vol 99 délimité par l'enveloppe 98. Ce domaine de commande de vol 99 est borné selon une première direction DIR1 en limitant l'amplitude de déplacement de la commande de poussée 50 et selon une deuxième direction DIR2 en limitant l'amplitude de déplacement de la commande de lacet 55. De plus, l'autorité de la commande de lacet 55 décroit à mesure que la composante de pas moyen augmente ce qui confère à l'enveloppe 98 une forme effilée en allant de bas et haut et de gauche à droite sur la figure 5.

Indépendamment de l'architecture du système de commande, le calculateur de pilotage 60 est configuré pour appliquer le procédé selon l'invention illustré sur la figure 4.

Durant une étape STP0, la commande de poussée 50 est manœuvrée par le pilote pour émettre un ordre de modification de la composante de pas moyen du premier pas PAS1 des premières pales 11 et du deuxième pas PAS2 des deuxièmes pales 16.

Lorsque cet ordre de modification est un premier ordre OA émis pour augmenter, par exemple de la même quantité, le premier pas et le deuxième pas et donc pour augmenter la composante de pas moyen, une phase de protection PPROT est suivant une option automatiquement mise en œuvre par le calculateur de pilotage.

Suivant une autre option, le procédé peut comprendre une étape STPTEST de détermination d'une vitesse d'augmentation de la composante de pas moyen du premier pas et dudit deuxième pas. La calculateur de pilotage 60 détermine par calcul la vitesse, dénommée « vitesse d'augmentation », à laquelle augmente la composante de pas moyen et initie alors la phase de protection PPROT seulement si la vitesse d'augmentation est supérieure à une valeur prédéterminée.

Indépendamment de cet aspect, durant la phase de protection PPROT, le calculateur de pilotage 60 évalue durant une étape de surveillance STP1 si la marge de contrôle de l'attitude en lacet, au regard d'une enveloppe 98 délimitant un domaine de commande de vol 99, est inférieure ou égale à un seuil S et/ou sera inférieure ou égale au seuil S, sans nécessairement calculer cette marge de contrôle de l'attitude en lacet.

Conformément à la figure 5, la marge de contrôle de l'attitude en lacet MRG peut être exprimée en degrés de pas, le seuil S prenant la forme d'un pourcentage prédéterminé d'une plage de commande PLG de pas à un point de fonctionnement courant PTCUR. Par exemple, le seuil S est compris entre 10 pourcents et 20 pourcents de la plage de commande PLG. Autrement dit et avec un seuil de 15 pourcents, le calculateur de pilotage 60 évalue si au point de fonctionnement de courant la marge de contrôle de l'attitude en lacet MRG par rapport à un bord de l'enveloppe 98 est inférieure ou égal à 15 pourcents de la plage de commande PLG.

Cette méthode peut être appliqué avec un point de fonctionnement prédictif qui sera atteint dans un intervalle de temps prédéterminé au regard de la vitesse à laquelle augmente le premier pas et le deuxième pas.

En référence à la figure 4, le calculateur de pilotage 60 peut évaluer si la marge de contrôle de l'attitude en lacet est inférieure ou égale au seuil S de diverses manières.

Selon une première alternative, le calculateur de pilotage 60 peut mémoriser un ensemble dénommé « ensemble mémorisé » contenant tous les points de fonctionnement qui sont considérés comme ne présentant pas la marge requise. Dès lors, le calculateur de pilotage 60 détermine le point de fonctionnement courant PTCUR à l'aide des signaux émis par le premier senseur 88 de mesure du premier pas et le deuxième senseur 89 de mesure du deuxième pas. Ensuite, durant une étape d'analyse STP1.1, le calculateur de pilotage 60 détermine si le point de fonctionnement courant est inclus dans l'ensemble mémorisé par comparaison. Enfin, durant une étape de décision STP1.2, le calculateur de pilotage 60 conclut que la marge de contrôle de l'attitude en lacet est inférieure ou égale au seuil lorsque le point de fonctionnement courant est inclus dans un tel ensemble.

Selon une deuxième alternative, le calculateur de pilotage peut mémoriser pour chaque point de fonctionnement au moins une information de marge, chaque information de marge indiquant si ce point de fonctionnement présente la marge requise dans des conditions courantes.

Dès lors, le calculateur de pilotage 60 affecte, durant une étape d'affection STP1.3, au point de fonctionnement courant l'information de marge associée dans sa mémoire et en déduit, durant une étape STP1.4, si la marge de contrôle de l'attitude en lacet au regard de ladite enveloppe 98 est inférieure ou égale audit seuil.

Selon un exemple, la chaine de caractères YES est affectée à un point de fonctionnement présentant une marge acceptable, la chaine de caractères NO étant affectée à ce point de fonctionnement dans le cas contraire. Si le point de fonctionnement courant est associé à la chaine de caractères NO, le calculateur de pilotage 60 en déduit que la marge de contrôle de l'attitude en lacet au regard de ladite enveloppe 98 est inférieure ou égale audit seuil.

Selon un autre exemple, une information de marge prend la forme d'un pourcentage qui est comparé au seuil qui lui-même prend la forme d'un pourcentage. Si le pourcentage affecté au point de fonctionnement courant est inférieur ou égal au seuil, le calculateur de pilotage en déduit que la marge de contrôle de l'attitude en lacet au regard de ladite enveloppe 98 est inférieure ou égale audit seuil.

Ces alternatives sont données à titre d'exemple. De la même manière, le calculateur de pilotage peut déterminer si une valeur prédite de la marge de contrôle de l'attitude en lacet est inférieure ou égale au seuil S.

Quelle que soit l'alternative, tant que la marge de contrôle de l'attitude en lacet courante est supérieure au seuil S et éventuellement que la prédiction de la marge de contrôle de l'attitude en lacet est supérieure au seuil S, durant une étape d'accélération STP2, le calculateur de pilotage 60 émet un signal d'accélération numérique, analogique ou optique pour augmenter la composante de pas moyen. Par exemple, ce signal d'accélération est transmis à un actionneur série 54 selon la figure 2 ou aux actionneurs 76, 77 selon la figure 3.

Dans la négative, durant une étape d'inhibition STP3 le calculateur de pilotage 60 inhibe le premier ordre OA. La composante de pas moyen n'est alors temporairement plus augmentée.

La figure 5 explicite ce fonctionnement. Durant un vol stationnaire, l'hélicoptère hybride 1 fonctionne selon le premier point de fonctionnement PT1. Lorsque le pilote manœuvre la commande de poussée 50, la composante de pas moyen augmente. Le deuxième point de fonctionnement PT2 est atteint. Pour conserver une marge de contrôle de l'attitude en lacet acceptable, la composante de pas moyen n'est plus augmentée. Naturellement, le pilote manœuvre la commande de lacet 55 ce qui éloigne le point de fonctionnement du bord droit de l'enveloppe 98 vers un troisième point de fonctionnement PT3. L'accélération de l'hélicoptère hybride 1 selon la direction d'avancement peut alors reprendre.

En référence à la figure 4, durant une étape additionnelle STP4 le calculateur de pilotage 60 peut émettre un signal de ralentissement numérique, analogique ou optique à au moins un actionneur pour baisser la composante de pas moyen, contrairement à l'ordre émis par le pilote. Par exemple, ce signal de ralentissement est transmis à un actionneur série 54 selon la figure 2 ou aux actionneurs 76, 77 selon la figure 3.

Selon un autre aspect, si l'ordre de modification est un deuxième ordre OR visant à faire baisser la composante de pas moyen, le calculateur de pilotage 60 n'inhibe pas cet ordre et le traite normalement. Le calculateur de pilotage 60 peut émettre un signal de ralentissement.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé de protection d'une marge de contrôle de l'attitude en lacet d'un hélicoptère hybride (1), ledit hélicoptère hybride (1) comportant un rotor de sustentation (2) agencé au dessus d'un fuselage (4) ainsi qu'au moins une première hélice (10) et au moins une deuxième hélice (15) disposées de part et d'autre du fuselage (4), ledit hélicoptère hybride (1) ayant une commande de poussée (50) configurée pour générer au moins un premier ordre ou un deuxième ordre pour modifier un premier pas de premières pales (11) de la première hélice (10) et un deuxième pas de deuxièmes pales (16) de la deuxième hélice (15), ledit hélicoptère hybride (1) ayant une commande de lacet (55) configurée pour modifier l'attitude en lacet dudit hélicoptère hybride (1) en augmentant le premier pas desdites premières pales (11) et en baissant le deuxième pas desdites deuxièmes pales (16),
**caractérisé en ce que** le procédé comporte une phase de protection (PPROT) comprenant l'étape suivante :
- suite à l'émission d'un dit premier ordre (OA) émis pour augmenter le premier pas et le deuxième pas, inhibition (STP3) par un calculateur de pilotage (60) de ce premier ordre (OA) lorsque ledit hélicoptère hybride atteint un point de fonctionnement pour lequel une marge de contrôle de l'attitude en lacet est inférieure ou égale à un seuil (S) et/ou pour lequel une prédiction de ladite marge de contrôle de l'attitude en lacet qui sera atteinte dans un intervalle de temps prédéterminé est inférieure ou égale au seuil (S).

2. Procédé selon la revendication 1,
**caractérisé en ce que** ladite marge de contrôle de l'attitude en lacet est exprimée en degrés de pas, ledit seuil (S) étant égal à un pourcentage prédéterminé d'une plage de commande (PLG) de pas à un point de fonctionnement courant (PTCUR), ledit point de fonctionnement courant (PTCUR) étant défini par une première valeur courante (PAS1cur) du premier pas et une deuxième valeur courante (PAS2cur) du deuxième pas atteintes durant une itération courante.

3. Procédé selon la revendication 2,
**caractérisé en ce que** ledit pourcentage est compris entre 10 pourcents et 20 pourcents.

4. Procédé selon l'une quelconque des revendications 1 à 3, **caractérisé en ce que** ledit procédé comporte une étape de détermination (STPTEST) d'une vitesse d'augmentation d'une composante de pas moyen du premier pas et dudit deuxième pas, ladite phase de protection étant initiée uniquement si ladite vitesse d'augmentation est supérieure à une valeur prédéterminée.

5. Procédé selon l'une quelconque des revendications 1 à 4, **caractérisé en ce que** ledit procédé comporte une phase d'évaluation (STP1) pour déterminer si ledit hélicoptère hybride atteint ledit point de fonctionnement pour lequel la marge de contrôle de l'attitude en lacet est inférieure ou égale au seuil, ladite phase d'évaluation (STP1) comportant les étapes suivantes ;
- détermination d'un point de fonctionnement courant (PTCUR) défini par une première valeur courante (PAS1cur) du premier pas et une deuxième valeur courante (PAS2cur) du deuxième pas à une itération courante,
- détermination (STP1.1) que le point de fonctionnement courant est inclus dans un ensemble mémorisé,
- détermination (STP1.2) que ladite marge de contrôle de l'attitude en lacet est inférieure ou égale audit seuil lorsque ledit point de fonctionnement courant est inclus dans ledit ensemble mémorisé.

6. Procédé selon l'une quelconque des revendications 1 à 4, **caractérisé en ce que** ledit procédé comporte une phase d'évaluation (STP1) pour déterminer si ledit hélicoptère hybride atteint ledit point de fonctionnement pour lequel la marge de contrôle de l'attitude en lacet est inférieure ou égale au seuil, ladite phase d'évaluation (STP1) comportant les étapes suivantes ;
- détermination d'un point de fonctionnement courant (PTCUR) défini par une première valeur courante (PAS1cur) du premier pas et une deuxième valeur courante (PAS2cur) du deuxième pas à une itération courante,
- affectation (STP1.3) à ce point de fonctionnement courant d'une information de marge, ledit hélicoptère hybride (1) comprenant une mémoire associant à chaque point de fonctionnement possible au moins une dite information de marge, ,
- détermination (STP1.4) que ladite marge de contrôle de l'attitude en lacet au regard de ladite enveloppe est inférieure ou égale audit seuil en fonction de ladite information de marge.

7. Procédé selon l'une quelconque des revendications 1 à 6, **caractérisé en ce que** suite à ladite inhibition (STP3) par le calculateur de pilotage (60) du premier ordre (OA) ledit procédé comporte l'étape suivante: baisse (STP4) du premier pas et du deuxième pas sur commande dudit calculateur de pilotage (60).

8. Procédé selon l'une quelconque des revendications 1 à 7, **caractérisé en ce que** ledit calculateur de pilotage (60) n'inhibe jamais (STP2) un dit deuxième ordre émis pour baisser de la même quantité le premier pas et le deuxième pas.

9. Hélicoptère hybride (1), ledit hélicoptère hybride (1) comportant un rotor de sustentation (2) agencé au dessus d'un fuselage (4), au moins une première hélice (10) et au moins une deuxième hélice (15) disposées de part et d'autre du fuselage (4), ledit hélicoptère hybride (1) ayant une commande de poussée (50) configurée pour générer au moins un premier ordre ou un deuxième ordre afin de modifier avec au moins un actionneur (54, 76, 77) de la même quantité un premier pas de premières pales (11) de la première hélice (10) et un deuxième pas des deuxièmes pales (16) de la deuxième hélice (15), ledit hélicoptère hybride (1) ayant une commande de lacet (55) configurée pour modifier l'attitude en lacet dudit hélicoptère hybride (1) en augmentant le pas desdites premières pales (11) et en baissant le pas desdites deuxièmes pales (16),
**caractérisé en ce que** ledit hélicoptère hybride (1) comporte un calculateur de pilotage (60) en communication avec la commande de poussée (50) et ledit au moins un actionneur (54, 76, 77), le calculateur de pilotage (60) étant configuré pour appliquer le procédé selon l'une quelconque des revendications 1 à 8.

10. Hélicoptère hybride selon la revendication 9,
**caractérisé en ce que** ledit hélicoptère hybride (1) comporte un premier senseur (88) de mesure du premier pas et un deuxième senseur (89) de mesure du deuxième pas.

11. Hélicoptère hybride selon l'une quelconque des revendications 9 à 10,
**caractérisé en ce que** ledit hélicoptère hybride (1) comporte une commande de pas cyclique (47) pour modifier cycliquement le pas de pales principales (3) du rotor de sustentation (2), ladite commande de pas cyclique (47) étant muni d'un organe déplaçable par un pilote et d'un senseur de position (470) émettant un signal de position, ledit signal de position variant en fonction d'une manœuvre de l'organe déplaçable.

## Patentansprüche

1. Verfahren zum Schützen eines Steuerungsspielraums für die Gierlage eines Hybridhubschraubers (1), wobei der Hybridhubschrauber (1) einen Auftriebsrotor (2), der über einem Rumpf (4) angeordnet ist, sowie mindestens einen ersten Propeller (10) und mindestens einen zweiten Propeller (15), die auf beiden Seiten des Rumpfes (4) angeordnet sind, aufweist, wobei der Hybridhubschrauber (1) eine Schubsteuerung (50) aufweist, die konfiguriert ist, um mindestens einen ersten Befehl oder einen zweiten Befehl zu erzeugen, um einen ersten Steigungswinkel von ersten Blättern (11) des ersten Propellers (10) und einen zweiten Steigungswinkel von zweiten Blättern (16) des zweiten Propellers (15) zu ändern, wobei der Hybridhubschrauber (1) eine Giersteuerung (55) aufweist, die konfiguriert ist, um die Gierlage des Hybridhubschraubers (1) durch Erhöhen des ersten Steigungswinkels der ersten Blätter (11) und Senken des zweiten Steigungswinkels der zweiten Blätter (16) zu ändern,
**dadurch gekennzeichnet, dass** das Verfahren eine Schutzphase (PPROT) mit folgendem Schritt umfasst:
- nach Ausgeben eines besagten ersten Befehls (OA), der ausgegeben wird, um den ersten Steigungswinkel und den zweiten Steigungswinkel zu erhöhen, Sperren (STP3) dieses ersten Befehls (OA) durch einen Steuerrechner (60), wenn der Hybridhubschrauber einen Betriebspunkt erreicht, bei dem ein Steuerungsspielraum für die Gierlage kleiner oder gleich einem Schwellenwert (S) ist und/oder bei dem eine Vorhersage des Steuerungsspielraums für die Gierlage, der in einem vorbestimmten Zeitintervall erreicht werden wird, kleiner oder gleich dem Schwellenwert (S) ist .

2. Verfahren nach Anspruch 1,
**dadurch gekennzeichnet, dass** der Steuerungsspielraum für die Gierlage in Grad des Steigungswinkels ausgedrückt ist, wobei der Schwellenwert (S) gleich einem vorgegebenen Prozentsatz eines Steuerungsbereichs (PLG) des Steigungswinkels bei einem aktuellen Betriebspunkt (PTCUR) ist, wobei der aktuelle Betriebspunkt (PTCUR) definiert ist durch einen ersten aktuellen Wert (PAS1cur) des ersten Steigungswinkels und einen zweiten aktuellen Wert (PAS2cur) des zweiten Steigungswinkels, die während einer aktuellen Iteration erreicht werden.

3. Verfahren nach Anspruch 2,
**dadurch gekennzeichnet, dass** der Prozentsatz zwischen 10 Prozent und 20 Prozent liegt.

4. Verfahren nach einem der Ansprüche 1 bis 3,
**dadurch gekennzeichnet, dass** das Verfahren einen Schritt des Bestimmens (STPTEST) einer Anstiegsgeschwindigkeit einer mittleren Steigungswinkelkomponente des ersten Steigungswinkels und des zweiten Steigungswinkels umfasst, wobei die Schutzphase nur dann eingeleitet wird, wenn die Anstiegsgeschwindigkeit größer als ein vorgegebener Wert ist.

5. Verfahren nach einem der Ansprüche 1 bis 4,
**dadurch gekennzeichnet, dass** das Verfahren eine Bewertungsphase (STP1) umfasst, um zu bestimmen, ob der Hybridhubschrauber den Betriebspunkt erreicht, bei dem der Giersteuerungsspielraum kleiner oder gleich dem Schwellenwert ist, wobei die Bewertungsphase (STP1) die folgenden Schritte umfasst:
- Bestimmen eines aktuellen Betriebspunkts (PTCUR), der durch einen ersten aktuellen Wert (PAS1cur) des ersten Steigungswinkels und einen zweiten aktuellen Wert (PAS2cur) des zweiten Steigungswinkels bei einer aktuellen Iteration definiert ist,
- Bestimmen (STP1.1), dass der aktuelle Arbeitspunkt in einem gespeicherten Satz enthalten ist,
- Bestimmen (STP1.2), dass der Giersteuerungsspielraum kleiner oder gleich dem Schwellenwert ist, wenn der aktuelle Betriebspunkt in dem gespeicherten Satz enthalten ist.

6. Verfahren nach einem der Ansprüche 1 bis 4,
**dadurch gekennzeichnet, dass** das Verfahren eine Bewertungsphase (STP1) umfasst, um zu bestimmen, ob der Hybridhubschrauber den Betriebspunkt erreicht, bei dem der Giersteuerungsspielraum kleiner oder gleich dem Schwellenwert ist, wobei die Bewertungsphase (STP1) die folgenden Schritte umfasst:
- Bestimmen eines aktuellen Betriebspunkts (PTCUR), der durch einen ersten aktuellen Wert (PAS1cur) des ersten Steigungswinkels und einen zweiten aktuellen Wert (PAS2cur) des zweiten Steigungswinkels bei einer aktuellen Iteration definiert ist,
- Zuweisen (STP1.3) einer Spielrauminformation zu diesem aktuellen Betriebspunkt, wobei der Hybridhubschrauber (1) einen Speicher umfasst, der jedem möglichen Betriebspunkt mindestens eine solche Spielrauminformation zuordnet,
- Bestimmen (STP1.4), dass der Giersteuerungsspielraum in Bezug auf die Hüllkurve kleiner oder gleich dem Schwellenwert ist, in Abhängigkeit von der Spielrauminformation.

7. Verfahren nach einem der Ansprüche 1 bis 6,
**dadurch gekennzeichnet, dass** nach dem Sperren (STP3) des ersten Befehls (OA) durch den Steuerrechner (60) das Verfahren den folgenden Schritt umfasst: Senken (STP4) des ersten Steigungswinkels und des zweiten Steigungswinkels auf Befehl des Steuerrechners (60).

8. Verfahren nach einem der Ansprüche 1 bis 7,
**dadurch gekennzeichnet, dass** der Steuerrechner (60) niemals einen besagten zweiten Befehl (STP2) sperrt, der ausgegeben wird, um den ersten Steigungswinkel und den zweiten Steigungswinkel um denselben Betrag zu senken.

9. Hybridhubschrauber (1), wobei der Hybridhubschrauber (1) einen Auftriebsrotor (2), der über einem Rumpf (4) angeordnet ist, mindestens einen ersten Propeller (10) und mindestens einen zweiten Propeller (15), die auf beiden Seiten des Rumpfes (4) angeordnet sind, aufweist, wobei der Hybridhubschrauber (1) eine Schubsteuerung (50) aufweist, die konfiguriert ist, um mindestens einen ersten Befehl oder einen zweiten Befehl zu erzeugen, um mit mindestens einem Aktuator (54, 76, 77) einen ersten Steigungswinkel der ersten Blätter (11) des ersten Propellers (10) und einen zweiten Steigungswinkel der zweiten Blätter (16) des zweiten Propellers (15) um denselben Betrag zu verändern, wobei der Hybridhubschrauber (1) eine Giersteuerung (55) aufweist, die konfiguriert ist, um die Gierlage des Hybridhubschraubers (1) durch Erhöhen des Steigungswinkels der ersten Blätter (11) und Senken des Steigungswinkels der zweiten Blätter (16) zu verändern,
**dadurch gekennzeichnet, dass** der Hybridhubschrauber (1) einen Steuercomputer (60) in Kommunikation mit der Schubsteuerung (50) und dem mindestens einen Aktuator (54, 76, 77) aufweist, wobei der Steuercomputer (60) konfiguriert ist, um das Verfahren nach einem der Ansprüche 1 bis 8 anzuwenden.

10. Hybridhubschrauber nach Anspruch 9,
**dadurch gekennzeichnet, dass** der Hybridhubschrauber (1) einen ersten Sensor (88) zur Messung des ersten Steigungswinkels und einen zweiten Sensor (89) zur Messung des zweiten Steigungswinkels aufweist.

11. Hybridhubschrauber nach einem der Ansprüche 9 bis 10,
**dadurch gekennzeichnet, dass** der Hybridhubschrauber (1) eine zyklische Steigungssteuerung (47) zum zyklischen Verändern des Steigungswinkels der Hauptblätter (3) des Auftriebsrotors (2) umfasst, wobei die zyklische Steigungssteuerung (47) mit einem von einem Piloten verstellbaren Element und einem Positionssensor (470), der ein Positionssignal ausgibt, versehen ist, wobei sich das Positionssignal in Abhängigkeit von einer Betätigung des verstellbaren Elements ändert.

## Claims

1. Method of protecting a margin for controlling the yaw attitude of a hybrid helicopter (1), said hybrid helicopter (1) including a lift rotor (2) arranged above a fuselage (4), as well as at least one first propeller (10) and at least one second propeller (15) arranged on either side of the fuselage (4), said hybrid helicopter (1) having a thrust control (50) configured to generate at least a first order or a second order for modifying a first pitch of first blades (11) of the first propeller (10) and a second pitch of second blades (16) of the second propeller (15), said hybrid helicopter (1) having a yaw control (55) configured to modify the yaw attitude of said hybrid helicopter (1) by increasing the first pitch of said first blades (11) and by reducing the second pitch of said second blades (16), **characterized in that** the method includes a protection phase (PPROT) comprising the following step:
- after a said first order (OA) for increasing the first pitch and the second pitch has been issued, inhibition (STP3) by a control computer (60) of this first order (OA) when said hybrid helicopter reaches an operating point for which a yaw attitude control margin is less than, or equal to, a threshold (S) and/or for which a prediction of said yaw attitude control margin that will be reached within a predetermined interval of time is less than, or equal to, the threshold (S).

2. Method according to Claim 1,
**characterized in that** the yaw attitude control margin is expressed in degrees of pitch, said threshold (S) being equal to a predetermined percentage of a pitch control range (PLG) at a current operating point (PTCUR), said current operating point (PTCUR) being defined by a first current value (PAS1cur) of the first pitch and by a second current value (PAS2cur) of the second pitch, which values are reached during a current iteration.

3. Method according to Claim 2,
**characterized in that** said percentage falls between 10% and 20%.

4. Method according to any one of Claims 1 to 3,
**characterized in that** said method includes a determination step (STPTEST) for determining a rate of increase of a mean pitch component of the first pitch and of said second pitch, said protection phase being initiated only if said rate of increase is greater than a predetermined value.

5. Method according to any one of Claims 1 to 4,
**characterized in that** said method includes an assessment phase (STP1) for determining whether said hybrid helicopter is reaching said operating point, for which the yaw attitude control margin is less than, or equal to, the threshold, said assessment phase (STP1) including the following steps:
- determining a current operating point (PTCUR) defined by a first current value (PAS1cur) of the first pitch and by a second current value (PAS2cur) of the second pitch at a current iteration,
- determining (STP1.1) that the current operating point lies within a saved set,
- determining (STP1.2) that the yaw attitude control margin is less than, or equal to, said threshold when said current operating point lies within said saved set.

6. Method according to any one of Claims 1 to 4,
**characterized in that** said method includes an assessment phase (STP1) for determining whether said hybrid helicopter is reaching said operating point, for which the yaw attitude control margin is less than, or equal to, the threshold, said assessment phase (STP1) including the following steps:
- determining a current operating point (PTCUR) defined by a first current value (PAS1cur) of the first pitch and by a second current value (PAS2cur) of the second pitch at a current iteration;
- assigning (STP1.3) margin information to this current operating point, said hybrid helicopter (1) including a memory associating at least one piece of said margin information with each possible operating point,
- determining (STP1.4) that said yaw attitude control margin with regard to said envelope is less than, or equal to, said threshold as a function of said margin information.

7. Method according to any one of Claims 1 to 6,
**characterized in that** after said inhibition (STP3) by the control computer (60) of the first order (OA), said method includes the following step: reducing (STP4) the first pitch and the second pitch when ordered by said control computer (60).

8. Method according to any one of Claims 1 to 7,
**characterized in that** said control computer (60) never inhibits (STP2) a said second order issued for reducing the first pitch and the second pitch by the same quantity.

9. Hybrid helicopter (1), said hybrid helicopter (1) including a lift rotor (2) arranged above a fuselage (4), at least one first propeller (10) and at least one second propeller (15), which propellers are arranged on either side of the fuselage (4), said hybrid helicopter (1) having a thrust control (50) configured to generate at least a first order or a second order for using at least one actuator (54, 76, 77) to modify, by the same quantity, a first pitch of first blades (11) of the first propeller (10) and a second pitch of second blades (16) of the second propeller (15), said hybrid helicopter (1) having a yaw control (55) configured to modify the yaw attitude of said hybrid helicopter (1) by increasing the pitch of said first blades (11) and by reducing the pitch of said second blades (16), **characterized in that** said hybrid helicopter (1) includes a control computer (60) in communication with the thrust control (50) and said at least one actuator (54, 76, 77), the control computer (60) being configured to apply the method according to any one of Claims 1 to 8.

10. Hybrid helicopter according to Claim 9,
**characterized in that** said hybrid helicopter (1) includes a first measurement sensor (88) for measuring the first pitch and a second measurement sensor (89) for measuring the second pitch.

11. Hybrid helicopter according to any one of Claims 9 to 10,
**characterized in that** said hybrid helicopter (1) includes a cyclic pitch control (47) for cyclically modifying the pitch of main blades (3) of the lift rotor (2), said cyclic pitch control (47) being provided with a member that can be moved by a pilot and with a position sensor (470) that emits a position signal, said position signal varying as a function of a movement of the movable member.
